Europäisches Patentamt

European Patent Office

Office européen des brevets

(11) Veröffentlichungsnummer: **0 015 457**
**B1**

(12) **EUROPÄISCHE PATENTSCHRIFT**

(45) Veröffentlichungstag der Patentschrift:
25.05.83

(51) Int. Cl.³: **B 29 F 3/03**, C 08 G 85/00

(21) Anmeldenummer: **80100885.5**

(22) Anmeldetag: **22.02.80**

(54) Verfahren zur getrennten Ableitung der einzelnen Phasenströme einer Mehrphasenströmung.

(30) Priorität: 03.03.79 DE 2908352

(43) Veröffentlichungstag der Anmeldung:
17.09.80 Patentblatt 80/19

(45) Bekanntmachung des Hinweises auf die Patenterteilung:
25.05.83 Patentblatt 83/21

(84) Benannte Vertragsstaaten:
DE FR GB IT NL

(56) Entgegenhaltungen:
DE-A-1 921 045
DE-A-2 116 939
DE-A-2 328 689
DE-C-915 689
FR-A-1 576 156
FR-A-2 245 674
FR-A-2 392 035

(73) Patentinhaber: BAYER AG, Zentralbereich Patente,
Marken und Lizenzen, D-5090 Leverkusen 1, Bayerwerk
(DE)

(72) Erfinder: Lehr, Günter, Dr., Bethelstrasse 17,
D-4150 Krefeld (DE)
Erfinder: Löhr, Dieter, Dr., Zum Wald 25, D-4234 Alpen
(DE)
Erfinder: Hucks, Uwe, Am Marienstift 30, D-4234 Alpen
(DE)
Erfinder: Vernaleken, Hugo, Dr., Ginsterweg 5,
D-3030 Walsrode (DE)

## Verfahren zur getrennten Ableitung der einzelnen Phasenströme einer Mehrphasenströmung

Die Erfindung betrifft ein Verfahren zur getrennten Ableitung der einzelnen Phasenströme einer Mehrphasenströmung, die aus einer hochviskosen, langsam fließenden Flüssigkeit oder Suspension und einem mindestens um das hundertfache schneller fließenden Gas besteht.

Bei vielen verfahrenstechnischen Prozessen sind Polymere aus Lösungen und/oder Suspensionen zu isolieren. Ein bekanntes Verfahren zur Aufkonzentrierung arbeitet mit einer Mehrphasenströmung in einem Schlangenrohr, bei der ein zäher Flüssigkeitsstrom durch ein strömendes Gas, das aus verdampften Lösungsmittel, gegebenenfalls unter Zusatz von Fremdgas bestehen kann, entlang der Wandung des Schlangenrohres vorangetrieben wird. Dabei kann über die Verdampfungstemperatur und den Partialdruck der auszudampfenden Komponenten im Gasraum, der durch den Druck am Ende des Schlangenrohres sowie durch eventuelle Zugabe von Fremdgas gesteuert wird, die gewünschte Verdampfung eingestellt werden.

Zur Trennung der einzelnen Phasenströmungen wurde der Mehrphasenstrom bisher in einen Zentrifugalabscheider geleitet.

Der Nachteil besteht hierbei darin, daß das mit hoher Geschwindigkeit aus dem Endrohr des Verdampfers austretende Dampf/Gas-Gemisch Flüssigkeitsanteile mitreißt, die gegen die Gehäusewand des Zentrifugalabscheiders geschleudert werden, dort länger verweilen und bei bestimmten Polymeren zu Stippenbildungen führen. Unter Stippen sind dabei stark gefärbte Partikel aus Crackprodukten zu verstehen, die aus den Polymeren durch längeres Verweilen an der Wandung bei gleichzeitig hohen Temperaturen entstehen. Als Folge treten im Produkt Verfärbungen und Partikel (Stippen) auf, die die Qualität der zu isolierenden Polymere wesentlich mindern.

Weiter ist aus der DE-A 1 921 045 ein senkrecht stehender Zyklon mit Bandschnecke und Förderschnecke bekannt, bei dem das Rohr mit der Mehrphasenströmung tangential eingeführt ist.

Bei dieser Vorrichtung ist nachteilig, daß die einfache Wendel sich nicht selbst reinigt und deshalb eine Stippenbildung nicht vermindert werden kann; wodurch wiederum die Produktqualität vermindert wird. Darüber hinaus bietet die Dichtung der Welle beim Durchgang durch den Boden erhebliche konstruktive und betriebliche Schwierigkeiten.

Auch ist aus der FR-A 15 76 156 und der DE-A 2 328 689 jeweils eine Rückwärtsentgasung in gleichlaufenden, kämmenden Zweiwellenschnecken bekannt, bei der aus einer Flüssigkeit eine verdampfungsfähige Komponente entfernt wird.

Der Nachteil dieses Verfahrens ist, daß die Gasblasen erst durch Umwälzen der Flüssigkeit diese verlassen, so daß Schaum entstehen kann, der dann mechanisch durch die Zweiwellenschnecke zerstört werden muß. Auch sind — bedingt durch die Luftblasen — nur kleine Mengen Gas von der Flüssigkeit zu trennen. Weiter besteht die Gefahr, daß durch örtliche Überhitzung im Bereich der Luftblasen Qualitätseinbußen (Stippen) beim Produkt eintreten können.

Der Erfindung liegt die Aufgabe zugrunde, ein Verfahren zu finden, welches erlaubt, die mit verschiedenen Geschwindigkeiten und Mengen ankommenden einzelnen Phasenströme einer Mehrphasenströmung auf getrennten Wegen so abzuleiten, daß durch eine scharfe Trennung eine gleichmäßige, einheitliche und hohe Qualität des zu gewinnenden Produktes gewährleistet ist.

Die Aufgabe wird erfindungsgemäß dadurch gelöst, daß die Mehrphasenströmung in eine quer zur Einströmrichtung angeordnete Zweiwellenschnecke mit gleichsinnig rotierenden, kämmenden Schnecken eingeleitet wird, deren Profile sich gegenseitig und die Wandung des Gehäuses in jedem Querschnitt direkt oder annähernd berühren, wobei die Flüssigkeit in Förderrichtung der Schnecken unter Bildung eines Gasabschlusses abtransportiert und das Gas in entgegengesetzter Richtung abgeleitet wird.

Für den Fachmann ist es überraschend, daß beim scharfen Umlenken mit gleichzeitiger Trennung der zwar in sich geschlossen fließenden, aber ineinander verschachtelten Phasenströme trotz hoher Gasgeschwindigkeit ($\leqq$ Schallgeschwindigkeit) und unterschiedlicher Mengen weder eine Verwirbelung, noch eine Schaumbildung eintritt. Vielmehr wird die Flüssigkeit oder Suspension kontinuierlich von den sich drehenden Schnecken einwandfrei erfaßt und abtransportiert, während das Gas über gegebenenfalls im Volumen zunehmende Schneckengänge entsprechend dem Druckgefälle in entgegengesetzter Richtung abströmt. Dieses Verfahren ermöglicht also eine schnelle, saubere Trennung beider Phasen mit sofortigem Abtransport der Medien. Es ist deshalb besonders geeignet für viskose, thermisch empfindliche Produkte, wobei durch das gegenseitige Abstreifen aller produktberührten Teile der Zweiwellenschnecke das Entstehen von qualitätsmindernden Stippen verhindert wird.

In einer speziellen Durchführung des Verfahrens werden eventuell vom Gasstrom mitgerissene feinste Restteilchen des Produkts durch Umkehrung der Steigung der Schnecken im Gasbereich getrennt vom Hauptflüssigkeitsstrom ausgetragen.

Durch diese Maßnahme wird erreicht, daß die feinsten Restteilchen nicht mehr in den Hauptflüssigkeitsstrom gelangen und somit die Qualität des Produktes mindern können.

In einer weiteren Durchführung des Verfahrens wird das Gas in einem nachgeschalteten Kühler kondensiert, wobei das Kondensat zur Spülung an der Wandung herabläuft.

Durch die Spülung wird erreicht, daß eventuell an der Wandung abgesetzte Produktteilchen wieder aufgelöst werden und somit nicht zur Verstopfung des Kühlers führen.

Einige Ausführungsbeispiele der Erfindung sind in den Zeichnungen dargestellt und werden im folgenden näher beschrieben.

Es zeigen

Fig. 1 einen Schnitt durch Mehrphasenströmungsrohr und Schnecken,

Fig. 2 einen Schnitt durch Mehrphasenströmungsrohr und Schnecke mit geteilter, gegenläufiger Steigung,

Fig. 3, 4 Schnitte durch Mehrphasenströmungsrohr, Zweiwellenschnecke und Kühler.

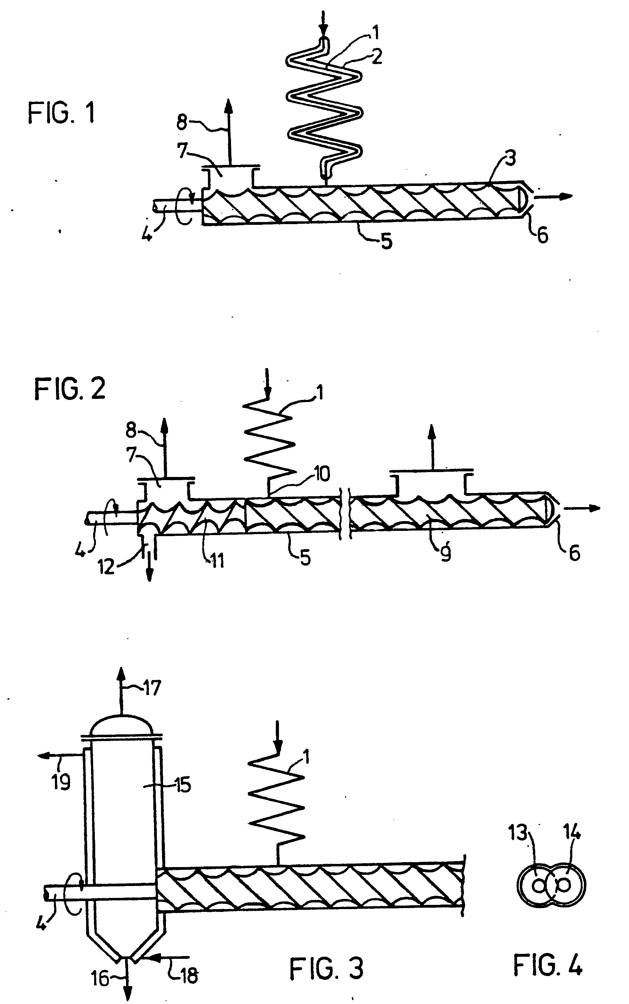

In Fig. 1 mündet ein Mehrphasenströmungsrohr 1, welches von einem Heizmantel 2 umgeben ist, in quer dazu verlaufende Schnecken 3 mit Antriebswellen 4.

Diese sind wiederum von einem Gehäuse 5 in geringem Abstand umgeben, welches in Richtung der Steigung der Schnecke 3 an einer Düse 6 endet und welches am entgegengesetzten Ende einen Dampfdom 7 mit Rohr 8 besitzt.

In Fig. 2 endet das Mehrphasenströmungsrohr 1 vor Schnecken 9, deren Steigung kurz hinter der Einmündung 10 in Richtung zum Dampfdom 7 entgegengesetzt verläuft und deren Gangtiefe 11 wegen des besseren Gasabflusses größer ausgeführt wurde. Weiter ist an diesem Ende der Schnecken 9 ein Auslaßstutzen 12 für unerwünschte Restteilchen des Produktes vorgesehen.

In Fig. 3 und 4 ist quer zu dem Mehrphasenströmungsrohr 1 eine kämmende Zweiwellenschnecke 13, 14 angeordnet, deren Profile sich untereinander und die Wandung des Gehäuses 5 in jedem Querschnitt infolge geringer Spaltbreiten annähernd berühren. Entgegengesetzt zur Düse 6 münden die beiden kämmenden Schnecken 13, 14 in einem Kühler 15, der unten mit einem Ablauf 16 und oben mit einem Gasabzug 17 ausgerüstet ist. Die großen Wärmeaustauschflächen werden über Zulauf 18 und Ablauf 19 mit dem entsprechenden Kühlmedium versorgt.

Als Schneckenmaschine eignen sich dabei alle bekannten Typen, die für das jeweilige Produkt hinsichtlich Steigung, Kamm- zu Kerndurchmesser, Drehzahl, Schneckenanzahl und Schneckenlänge optimal auszulegen sind.

Die Mehrphasenströmung aus einer zähen langsam fließenden Flüssigkeit und einem mit hoher Geschwindigkeit fließenden Gas strömt gegen die quer dazu sich drehenden Schnecken 3 bzw. 9 bzw. 13, 14. Die Flüssigkeit wird sofort von den Schnecken erfaßt und zur Düse 6 transportiert, wobei ein gasdichter Verschluß im Schneckenkanal zwischen Einmündung 10 und Düse 6 gebildet wird. Das Gas fließt entsprechend dem Druckgefälle in entgegengesetzter Richtung ab und verläßt das Gehäuse 5 über den Dampfdom 7 zwecks Ableitung durch das Rohr 8 bzw. über den Kühler 15 nach Kondensation durch das Rohr 16, wobei im letzteren Fall das Kühlmedium über Zulauf 18 und Ablauf 19 geleitet wird. Bei Umkehrung der Steigung der Schnecke (Schnecke 11) werden aus dem Gasstrom ausgeschiedene Restteilchen am Produkt über den Auslaßstutzen 12 entfernt.

## Patentansprüche

1. Verfahren zur getrennten Ableitung der einzelnen Phasenströme einer Mehrphasenströmung, die aus einer hochviskosen, langsam fließenden Flüssigkeit oder Suspension und einem mindestens um das hundertfache schneller fließenden Gas besteht, dadurch gekennzeichnet, daß die Mehrphasenströmung in eine quer zur Einströmrichtung angeordnete Zweiwellenschnecke mit gleichsinnig rotierenden, kämmenden Schnecken (3, 9, 13, 14) eingeleitet wird, deren Profile sich gegenseitig und die Wandung des Gehäuses (5) in jedem Querschnitt direkt oder annähernd berühren, wobei die Flüssigkeit in Förderrichtung der Schnecken unter Bildung eines Gasabschlusses abtransportiert und das Gas in entgegengesetzter Richtung abgeleitet wird.

2. Verfahren nach Anspruch 1, dadurch gekennzeichnet, daß eventuell vom Gasstrom mitgerissene feinste Restteilchen des Produktes durch Umkehrung der Steigung der Schnecken (9) im Gasbereich getrennt vom Hauptflüssigkeitsstrom ausgetragen werden.

3. Verfahren nach Anspruch 1 oder 2, dadurch gekennzeichnet, daß das Gas in einem nachgeschalteten Kühler (15) kondensiert wird, wobei das Kondensat zur Spülung an der Wandung herabläuft.

## Claims

1. Method for the separate discharge of the individual phase streams of a multiple phase stream which consists of a highly viscous, slowly-flowing liquid or suspension and a gas flowing at least a hundred times faster, characterised in that the multiple phase stream is passed into a double shaft screw apparatus which is arranged transversely to the direction of inflow and has meshing screws (3, 9, 13, 14) rotating in the same direction whose profiles directly or almost touch each other and the wall of the housing (5) in each cross-section, the liquid being transported away in the direction of conveyance of the screws, forming a gas shut-off, and the gas being discharged in the opposite direction.

2. Method according to Claim 1, characterised in that any very fine residual particles of product entrained by the gas stream are ejected by reversing the pitch of the screws (9) in the gas region separately from the main liquid stream.

3. Method according to Claim 1 or 2, characterised in that the gas is condensed in a subsequent cooler (15) and the condensate runs down the walls for rinsing purposes.

## Revendications

1. Procédé pour la dérivation séparée des courants individuels de phase d'un écoulement multiphasé qui est constitué par un liquide très visqueux s'écoulant lentement ou une suspension et un gaz s'écoulant au moins cent fois plus vite, caractérisé en ce que l'écoulement multiphasé est conduit dans une vis sans fin à deux arbres disposée transversalement par rapport au sens d'écoulement et comportant des hélices (3, 9, 13, 14) engrénantes et tournant dans le même sens, dont les profils se touchent mutuellement, ainsi que la paroi de l'enveloppe (5), dans chaque section transversale, directement ou à peu près, le liquide étant transporté dans le sens d'avancement des vis sans fin en effectuant un blocage de gaz et le gaz étant dérivé dans le sens opposé.

2. Procédé selon la revendication 1, caractérisé en ce que des particules restantes très fines du produit entraînées éventuellement par le courant gazeux sont déchargées séparément du courant principal de liquide par inversion du pas des vis sans fin (9) dans la zone du gaz.

3. Procédé selon la revendication 1 ou 2, caractérisé en ce que le gaz est condensé dans un dispositif de réfrigération (15) monté en aval, le condensat s'écoulant sur la paroi pour le rinçage.

FIG. 1

FIG. 2

FIG. 3

FIG. 4